# EUROPEAN PATENT APPLICATION

(11) **EP 1 293 816 A2**
(43) Date of publication of application: **19.03.2003**
(21) Application number: 02014252.7
(22) Date of filing: 26.06.2002
(51) Int. Cl.: G02B 21/00

(54) **Surgical microscope system**

(30) Priority: 17.09.2001 JP 2001282326
(71) Applicant: Sibata, Iekado, Ichikawa-shi, Chiba-ken (JP); Seiki, Yoshikatsu, Tokyo (JP)
(72) Inventor: Sibata, Iekado, Chiba-ken (JP); Seiki, Yoshikatsu, Tokyo (JP); Udagawa, Teruzou, Saitama-ken (JP)
(74) Representative: Grünecker, Kinkeldey, Stockmair & Schwanhäusser Anwaltssozietät

(57) **Abstract**

A surgical microscope system utilizes a surgical microscope system 1 so that surgical procedures can be performed by a surgeon X and a surgical assistant Y while viewing a three-dimensional image displayed on each of CRT displays 30A, 30B. Comparing with the conventional system utilizing eyepieces, the surgical microscope system of the present invention hardly causes eye fatigue or physical fatigue, so that a burden on the body can be relieved.

## Description

### BACKGROUND OF THE INVENTION

### 1. FIELD OF THE INVENTION

The present invention relates to a surgical microscope system. In particular, the present invention relates to a surgical microscope system preferably used in neurosurgery or the like.

### 2. DESCRIPTION OF RELATED ART

In the field of neurosurgery, comparing with the old techniques, the development in the technology of a surgical microscope has made significant improvements in surgical technologies and the results thereof. Presently, therefore, the surgical microscope is indispensable for neurosurgery, so that any surgical operation without using a surgical microscope cannot be considered at all.

A typical surgical microscope includes a pair of eyepieces to be used by a surgeon. In recent years, furthermore, there is one having additional pair of eyepieces for a surgical assistant.

The technology of neurosurgery has been developed and the time required for surgical procedures becomes longer because of highly complex procedures, so that it becomes overstress to eyes of the surgeon who performs such procedures using the surgical microscope. Therefore, it has been pointed out that there is a possibility of not only causing eyestrain but also causing other ophthalmic troubles such as visual impairment and retinal blood vessel paralysis.

In addition, the surgical microscope having the additional eyepieces for the surgical assistant cannot provide the surgical assistant with stereophonic vision. Therefore, protracted surgical procedures over many hours become too burdensome for the eyes and the body.

### SUMMARY OF THE INVENTION

A primary object of the present invention is to provide a surgical microscope system capable of reducing the burdens on surgeons and surgical assistants.

A surgical microscope system comprises: an objective lens on which reflected light from an imaging part is incident; a spectrogram distributes luminous flux from the objective lens into tow directions; photoelectric imaging means provided on each distributed sides of the luminous flux; an image processing apparatus for generating image signals in response to imaging signals from each photoelectric imaging means and alternately outputting the image signals; image displaying means for alternately displaying images in response to the respective image signals; and a stereoscope generator for impressing the displayed image according to one of the image signals on one of eyes while impressing the displayed image according to the other of the image signals on the other of eyes.

According to such a configuration of the surgical microscope system, surgical procedures can be performed by a surgeon and a surgical assistant while viewing a three-dimensional image displayed on the image displaying means. Therefore, there is no need to use eyepieces and eye fatigue or physical fatigue is hardly occurred, so that a burden on the body can be relieved.

In the present invention, preferably, a plurality of the image displaying means may be included, where the orientation of the image to be displayed by at least one of the image displaying means may be variable.

According to such a configuration of the system, it becomes possible to display the image with the same orientation as that of the imaging portion by changing the orientation of an image in response to the direction of viewing such an image even though the imaging portion should be viewed from different directions, for example, at the time of performing surgical procedures in which the surgeon and the surgical assistant face to each other. Thus, prompt surgical procedures can be performed.

In the present invention, preferably, the image processing apparatus may include: a reference image generation portion for generating a basis image signal in response to the imaging signal from each of the photoelectric imaging means and displaying the basis image on the image displaying means; and an invert image generation portion for generating an inverted image signal provided as an inversion of the basis image in the vertical or horizontal direction in response to the imaging signal.

In such a configuration of the system, for example, the image displaying means for each of the surgeon and the surgical assistant can be previously prepared even though the imaging part is viewed from the different direction by each of the surgeon and the surgical assistant. Depending on the viewing direction of each of the surgeon and the surgical assistant, the image to be displayed can be inverted to a predetermined direction. As a result, the surgeon and the surgical assistant are allowed to view the image in the same direction as that of viewing the imaging part by the surgeon and the surgical assistant. Thus, prompt surgical procedures can be performed.

In the present invention, the image processing apparatus may include a masking portion for displaying a predetermined part being imaged among the images displayed on the image forming means.

According to such a configuration of the system, only a predetermined surgical field such as an affected part or the like being imaged only comes into view of each of the surgeon and the surgical assistant by a masking portion, therefore, the surgeon and so on may only focus clearly on the target part. Therefore, even though long hours surgical procedures, the possibility of causing eye fatigue can be further decreased and burdensome to the surgeon or the like can be reduced.

In the present invention, the image processing apparatus may include a fader for adjusting a light intensity of an image to be displayed by the image displaying means.

According to such a configuration of the system, the fader regulates the light intensity to prevent the image on the CRT display from being excessively brightened. Therefore, the displayed image is prevented from halation, so that the surgeon can be allowed to perform surgical procedures without difficulty.

### BRIEF DESCRIPTION OF THE DRAWINGS

Fig. 1 is a general view of a principal configuration of the surgical microscope system as a first preferred embodiment of the present invention;
Fig. 2 is a graphical representation of neurosurgery using the surgical microscope system of the first preferred embodiment by a surgeon and a surgical assistant facing to each other;
Fig. 3 is a general view of a principal configuration of the surgical microscope system as a second preferred embodiment of the present invention;
Fig. 4 is a graphical representation of neurosurgery using the surgical microscope system of the second preferred embodiment by a surgeon and a surgical assistant facing to each other;
Fig. 5 is a block diagram that illustrates a surgical microscope system of the second preferred embodiment;
Fig. 6 is a schematic diagram for illustrating that an image displayed on each of the displays in the second preferred embodiment is being masked;
Fig. 7 is a circuit diagram in which an image inverter of the second preferred embodiment is incorporated;
Fig. 8 is general view for illustrating a state of neurosurgery using the surgical microscope system of the second preferred embodiment;
Fig. 9 is a schematic diagram for illustrating an image displayed on each of the displays during the neurosurgery in the second preferred embodiment;
Fig. 10 is a schematic diagram for illustrating the state of surgical procedures on a spinal cord in accordance with the second preferred embodiment; and
Fig. 11 is a schematic diagram for illustrating an image displayed on each of CRT displays during the surgical procedures on the spinal cord in the second preferred embodiment.

### DETAILED DESCRIPTION OF THE PREFERRED EMBODIMENTS

### [First Preferred Embodiment]

Hereinafter, we will describe the configuration of a surgical microscope system as a first preferred embodiment of the present invention with reference to the attached figures.

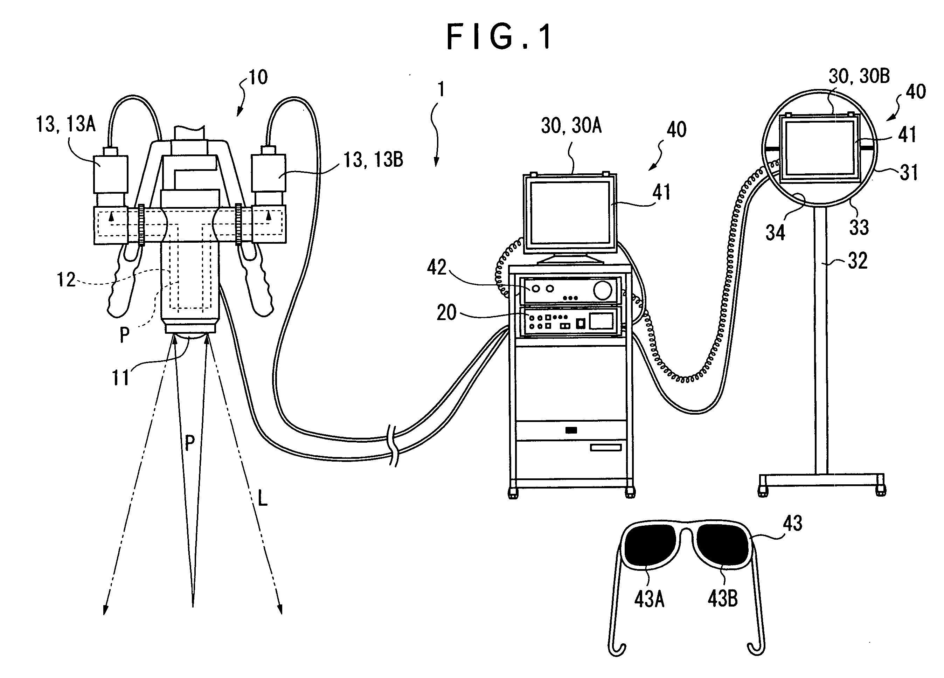

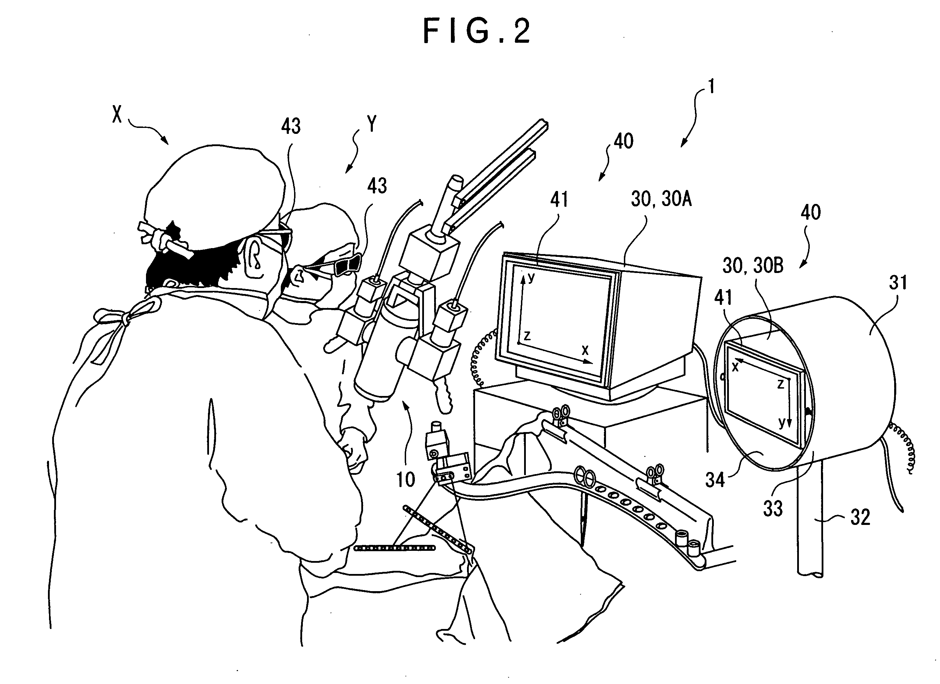

Fig. 1 shows a general view of a principal configuration of the surgical microscope system 1 of the present embodiment. Also, Fig. 2 shows a graphical representation of neurosurgery using the surgical microscope system 1 by a surgeon X and a surgical assistant Y facing to each other.

In these figures, the surgical microscope system 1 comprises a microscope body 10, an image processing apparatus 20, image-displaying means (i.e., two CRT displays) 30 (30A, 30B), and a three-dimensional image formation means 40.

The microscope body 10 comprises: an objective lens 11 directing to an imaging part (i.e., a surgical field), on which reflected light P from the imaging part can be incident; a spectrogram 12 that bends the reflected light P from the imaging part to 90 degrees and then distributes the reflected light P in two directions; and two CCD cameras 13 (13A, 13B) as electro-optic imaging means on which each luminous flux distributed by the spectrogram 12 can be incident.

The objective lens 11 may be a general objective lens to be used in a typical surgical microscope. Especially, it may be an objective lens being constructed so as to irradiate illumination L on the imaging part.

The spectrogram 12 may be, for example, a pair of zoom lenses (not shown in the figure) arranged in parallel on the light output side of the objective lens 11. Each of the zoom lenses is constructed by including a beam splitter or the like arranged on the light output side of the light output side. In this case, furthermore, the zoom lens has an automatic focus facility.

The CCD camera 13 is not limited to a specific one. In this embodiment, however, the CCD camera 13 is one characterized by the following features. That is, the number of CCD pixels is 41 x 30,000 pixels, the signal system is the NTSC color television system, and an imaging element is 1/3" color CCD, and a horizontal resolution of 750 TV (composite VIDEO).

The image processing apparatus 20 is capable of generating a high-speed image signal in response to an output signal from each of CCD cameras 13A, 13B and switching between image signals from the respective CCD cameras 13A, 13B, followed by the output of image signals to a CRT display 30 to display the desired images on the screens thereof. Such a processing may be performed by an appropriate image-processing program (software) or a built-in high-scan converter.

Furthermore, the image processing apparatus 20 has an output terminal to output image signals to a video cartridge recorder (VCR) or the like for recording images displayed on the CRT display 30 on a video tape as it is.

The CRT display 30 used in this embodiment may be one typically used in the art. According to the present invention, however, means for displaying an image is not limited to such a CRT display 30. Alternatively, a liquid crystal display, a projector, or any image-displaying means can be used.

Furthermore, in this present embodiment, one of the CRT displays 30 is a CRT display 30B provided for the surgical assistant Y and is mounted on a turntable stand 31.

The turntable stand 31 comprises an external cylindrical part 33 fixed on a column 32 and an internal cylindrical part 34 housed in the external cylindrical part 33, where the internal cylindrical part 34 is allowed to turn in the circumferential direction. In addition, the CRT display 30B is housed and fixed in the internal cylindrical part 34.

Therefore, using the turntable stand 31, it becomes possible to rotate the CRT display 30B against the CRT display 30A used by the surgeon X to any angle, for example 90 degrees or 180 degrees in any direction, so that the orientation of the display can be adjusted.

In Fig. 2, by the way, the CRT display 30B is turned to 180 degrees with respect to the CRT display 30A so that it can be turned upside down (see XYZ coordinates in the figure).

The stereoscope generator 40 comprises a liquid crystal polarizing apparatus 41 mounted on the front of the screen of the CRT display 30, a driver unit 42 for driving and controlling the liquid crystal polarizing apparatus 41, and circular polarization eyeglasses 43 to be used by each of the surgeon X and the surgical assistant Y.

According to such a configuration of the stereoscope generator 40, the driver unit 42 changes the polarizing direction of the liquid crystal polarizing apparatus 41 in synchronization with the switching of images displayed on the CRT display 30.

That is, during the period of displaying an image obtained by the CCD camera 13A on the CRT displays 30, the polarizing direction of the liquid crystal polarizing apparatus 41 is brought into line with the polarizing direction of the polarizing plate 43A corresponding to, for example, a left-eyed portion of the circular polarization eyeglasses 43 for making a visual identification only by the left eye. In addition, during the period of displaying images obtained by the CCD camera 13B on the CRT display 30, the polarizing direction of the liquid crystal polarizing apparatus 41 is brought into line with the polarizing direction of the polarizing plate 43B corresponding to a right-eyed portion of the circular polarization eyeglasses 43. Consequently, an image on the CRT display 30 can be viewed as a three-dimensional image.

According to the first preferred embodiment, the following advantages can be obtained.
(1) Using the surgical microscope system 1, both the surgeon X and the surgical assistant Y are allowed to perform surgical procedures while viewing three-dimensional images displayed on the CRT displays 30A, 30B, respectively. Comparing with the conventional one using eyepieces, even though long hours of surgical procedures, it is difficult to cause eye fatigue or physical fatigue to reduce burdensome to the body.
(2) In the surgical microscope system 1, the imaging part is displayed on each of the CRT displays 30A, 30B in the same direction of being viewed by the surgeon X. However, the CRT display 30B for the surgical assistant Y is mounted on the turntable stand 31, so that the CRT display 30B for the surgical assistant Y may be appropriately turned if the image part can be shown from the different direction, for example when the surgical operation in which the surgeon X and the surgical assistant Y face to each other to perform the surgical operations. Therefore, there is a less possibility of mixing up vertical and horizontal directions of the image, compared with the case in which the CRT display 30A for the surgeon X is only used (i.e., there is no need to consider a replacement of the direction of surgical procedures or the like with a position on which the surgical assistant Y looks at the imaging part). Thus, prompt surgical procedures can be performed.
(3) A state of surgical procedures can be viewed through the CRT displays 30, so that each of interns or nurse students who are visitors of an operating room, or surgical assistant nurses is able to grasp the progress in surgical operations. Therefore, its effects can be exerted with respect to a training program, a pre-graduating study, or a post-graduating study, or with respect to easiness of nursing care.
(4) The image processing apparatus 20 has the video output terminal, so that an image can be recorded on videotape. The image being recorded on the videotape is regenerated through the stereoscope generator 40. Therefore, the three-dimensional image can be surely viewed even though the surgical procedures have already completed.
(5) As the circular polarization eyeglasses 43 are used, the image can be viewed as a three-dimensional image even though the surgeon X or the surgical assistant Y inclines his or her head. The three-dimensional image can be surely viewed and a further improvement of the usability can be obtained.
(6) In general, the C C D camera 13 generates an output signal at a frequency of about 60 Hz CCD camera. However, it can be converted into an image signal of 120 Hz by means of a high scan converter or the like, which is almost a double of the output signal. Thus, the flickering on the CRT display 30 is avoided, and visibility can be improved
(7) According to the configuration of the surgical microscope system 1, different from one using an endoscope, the depth of focus of the microscope body 10 can be perfectly adjusted from a shallow imaging position to a deep imaging position. Especially, it can be preferably used in the field of neurosurgery in which most surgical procedures are performed on the deep imaging positions.

### [Second Preferred Embodiment]

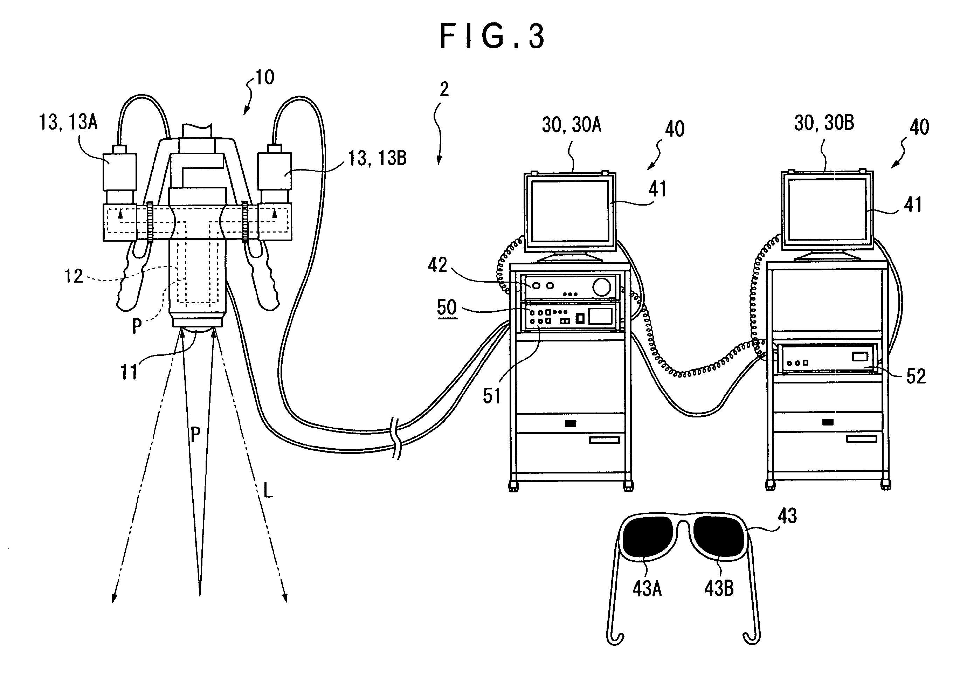

Hereinafter, we will describe a surgical microscope as a second preferred embodiment of the present invention with reference to Figs. 3 to 11.

As shown Fig. 3, the surgical microscope system 2 is constructed just as in the case of the first preferred embodiment except of the follows. In this embodiment, that is, the configuration of the image processing apparatus is different from that of the first preferred embodiment and there is no turntable stand.

In the following description, any structural components in the second preferred embodiment will be denoted by the same reference numerals as those of the first preferred embodiment and their explanations will be omitted or simplified for eliminating redundancy.

As shown in Figs. 3 to 5, the surgical microscope system 2 comprises a microscope body 10, an image processing apparatus 50, two CRT displays 30 (30A, 30B) as means for displaying an image, and stereoscope generator 40. In this embodiment, the microscope body 10, the CRT displays 30, and the stereoscope generator 40 are same as those shown in the first preferred embodiment. Therefore, their explanations will be omitted.

The image processing apparatus 50 generates basis image signals in response to output signals from the CCD cameras 13A, 13B at a high speed, respectively. Then, each of the basis image signals are processed in a predetermined manner. Subsequently, the processed image signals are alternately outputted to the CRT displays 30 to display an appropriate image on each of the CRT displays 30. Such an image processing apparatus comprises a processor 51 having a reference image generator portion as a processing program, and an image inverter 52 having an invert image generator portion as another processing program.

Here, the image processing apparatus 50 having the processor 51 and the image inverter 52 also includes an output terminal to a video tape recorder or the like just as in the case of the image processing apparatus 20 of the first preferred embodiment, so that an image displayed on the CRT display 30 can be recorded on a video tape.

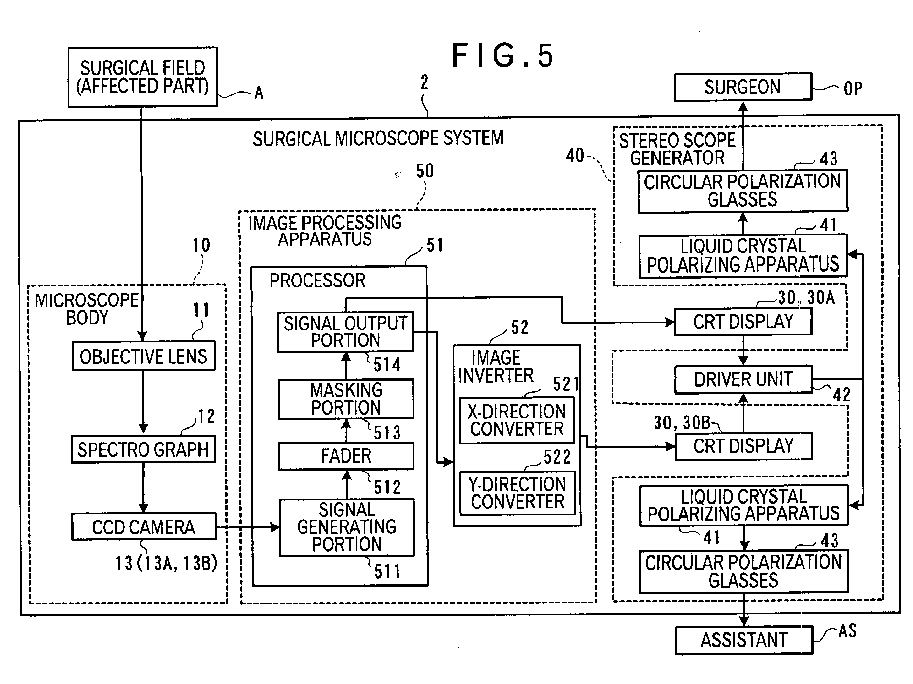

As shown in Fig. 5, the processor 51 of the image processing apparatus 50 generates basis image signals in response to output signals from the CCD cameras 13A, 13B, respectively, at a high speed. The basis image signals are alternately outputted to the CRT display 30. Such a processor 51 comprises a signal generating portion 511, a fader 512, a masking portion 513, and a signal output portion 514.

The signal generating portion 511 generates basis image signals in response to output signals from the CCD cameras 13A, 13B, respectively, at a high speed.

The fader 512 is responsible for automatically regulating input basis image signals before displaying an image on the CRT display 30 such that the light intensity of the image to be displayed on the CRT display 30 is equal to or less than a predetermined light intensity.

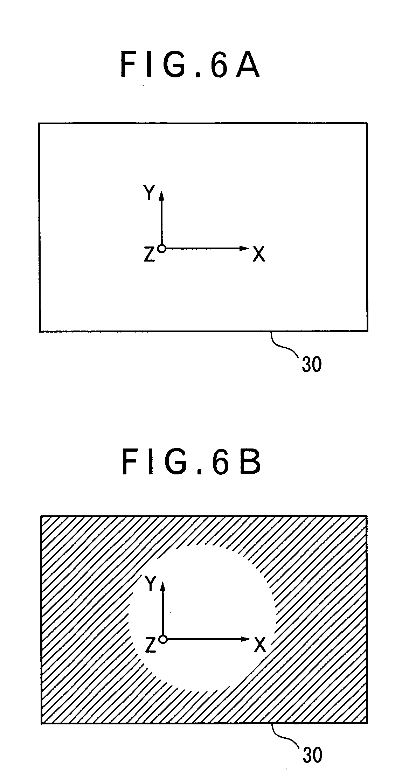

In the basis image signals automatically regulated as described above, the masking portion 513 processes the basis image signal such that any regions except a predetermined region, for example any regions except an affected part A as a field of operation, can be changed to black on the CRT display so that the surgeon OP or the like cannot recognize it. In other words, the masking portion 513 only permits the display of the affected part A. Therefore, the image displayed on the CRT display 30 as shown in Fig. 6(A) (represented as XYZ coordinates) is converted into one colored with a most dark color to prevent that the surgeon OP observes such a color.

The signal output portion 514 outputs basis image signals to the main CRT display 30A one after the other. Here, the basis image signal corresponding to the CCD cameras 13A and 14A is generated from the signal generating portion 511 and, it is passed through the fader 512 and the masking portion 513. In addition, the signal output portion 514 outputs similar basis image signals alternately to the image inverter 52.

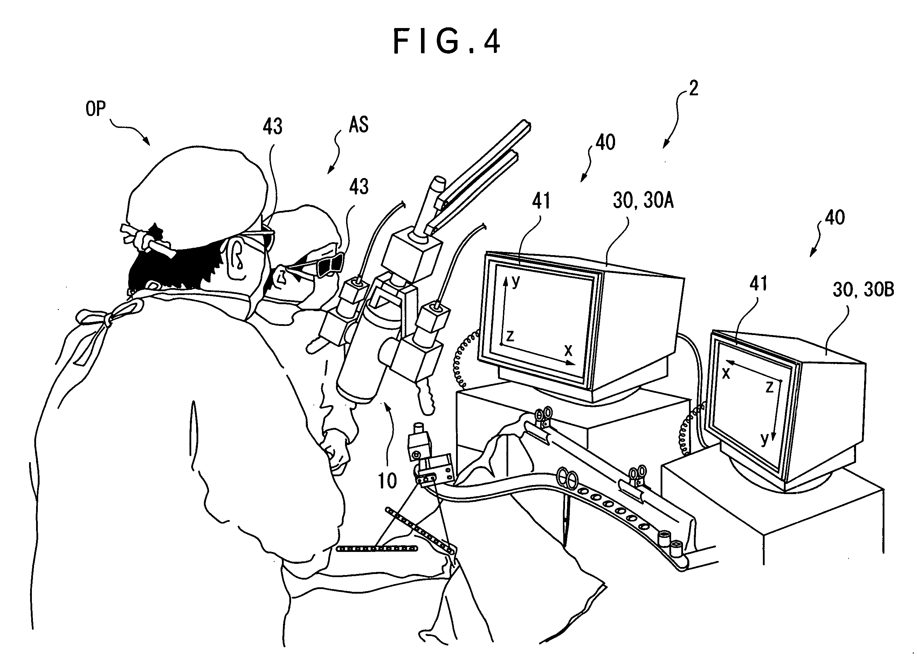

As shown in Figs. 3 and 4, the image inverter 52 has a function of reversing an image on the sub CRT display 30B such that an image displayed on the sub CRT display 30B can be one provided as a invert image of the reference image displayed on the CRT display 30A in the X direction (lateral direction) and the Y direction (vertical direction) as shown in Fig. 4 by converting basis image signals inputted from signal emission portion 514. Thus, the image inverter 52 has an X-directed converter 521 for reversing the image in the X direction and a Y-directed converter 522 for reversing the image in the Y direction. In the process of reversing the image in the X direction, image information on a look-up table is subjected to an invert operation in response to a center axis passing through the center of the image in the Y direction. On the other hand, the process of reversing in the Y direction can be performed by the same way as that of the Y direction conversion 522. Therefore, the image displayed on the sub CRT display 30B can be provided as an inverted image obtained by reversing a reference image in each of the X and Y directions.

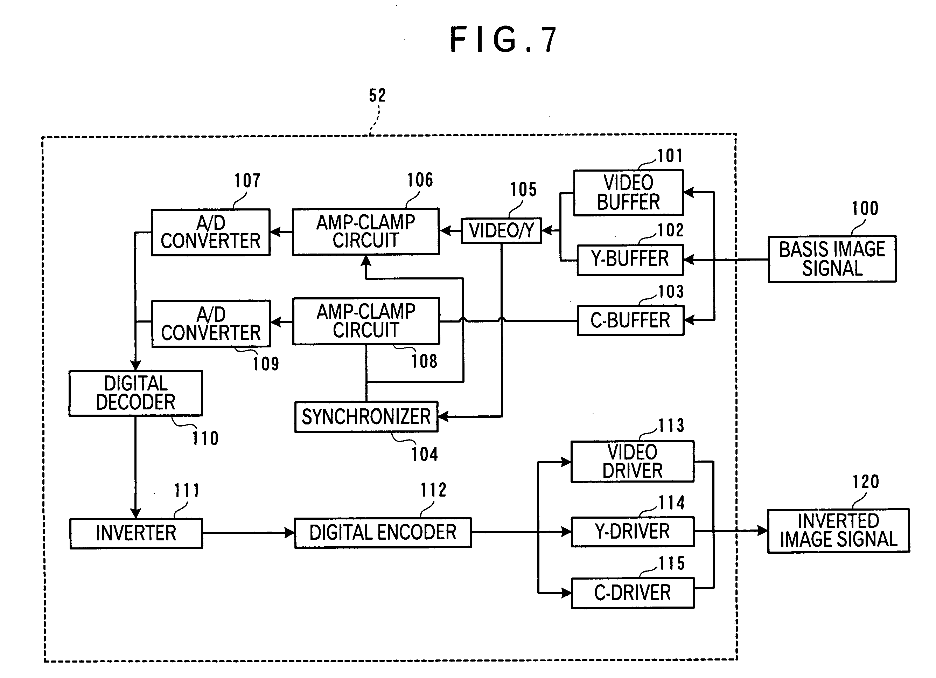

More concretely, an image invert operation in the image inverter 52 can be implemented by a circuit shown in Fig. 7. That is, the basis image signals 100 inputted from the respective CCD cameras 13A 13B are temporally stored in a video buffer 101, a Y buffer 102 as a predetermined standard luminance signal, and a C buffer 103 as a predetermined color-difference signal, respectively.

Subsequently, when a screenful of basis image signals corresponding to the basis image is accumulated while a synchronizer 104 brings the basis image signal stored in the video buffer 101 into sync with the luminance signal stored in the Y buffer circuit 102, the synchronized signals are outputted to an unclamp circuit 106 through a video/Y circuit 105. Then, the unclamp circuit 106 amplifies the signal and an A/D converter 107 converts the amplified signal into a digital signal. In addition, the synchronizer 104 brings the color-difference signal into sync with the previously synchronized signal in the C buffer 103. Subsequently, the unclamp circuit 108 amplifies the synchronized signal and an A/D converter 109 converts the amplified signal into a digital signal.

In response to each digitalized signal obtained above, digital signals (digital RGB signals) for the respective three primitive colors are formed by the digital decoder 110. Then, the digital RGB signals are subjected to an inversion process in the inverter 111 using a lookup table. After that, the digital RGB signals are reconverted into analog RGB signals by a digital encoder 112. Then, these analog RGB signals are temporally stored in a video driver 113, a Y driver 114, and a C driver 115. At the time that a screenful of basis image signals corresponding to the basis image, the inverted image signals 120 are outputted to the CRT display 30(30B), respectively.

Next, we will describe surgical procedures performed on the proximity of brain of a patient.

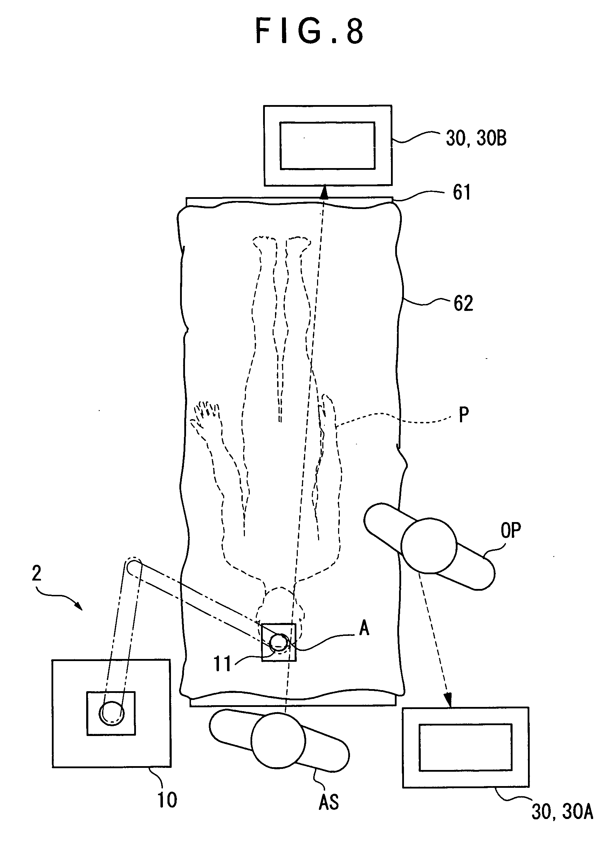

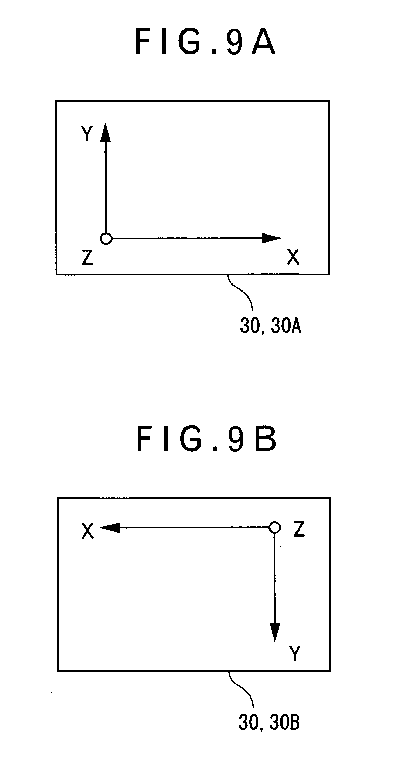

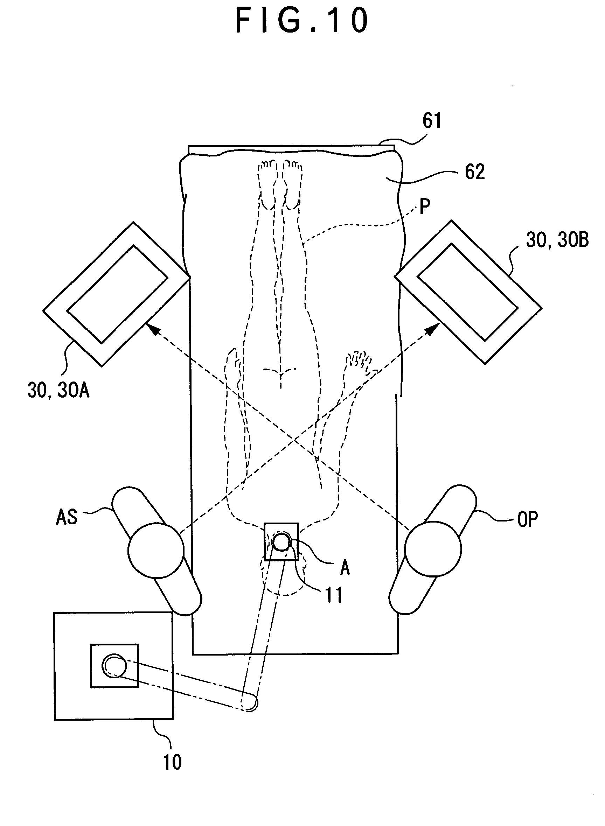

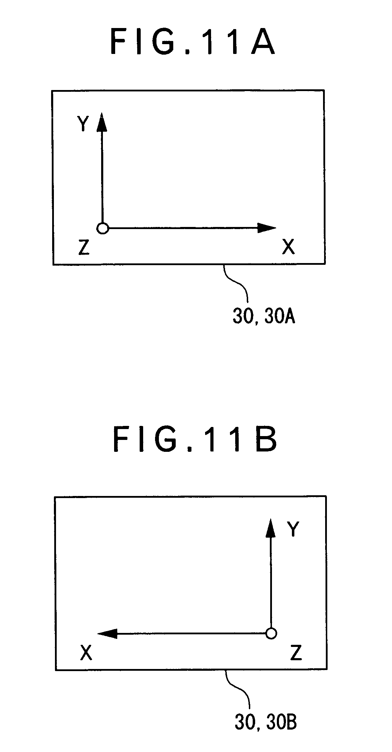

Fig. 8 is a schematic diagram for illustrating the positions of a surgeon and a surgical assistant at the time of performing surgical procedures on the brain. Fig. 9 is a schematic diagram for illustrating an image displayed on each of CRT displays 30 during the surgical procedures in Fig. 8. Fig. 10 is a schematic diagram for illustrating the positions of the surgeon and the surgical assistant who performs surgical procedures on a spinal cord. Fig. 11 is a schematic diagram for illustrating an image displayed on each of CRT displays 30 during the surgical procedures in Fig. 10.

For the surgical operation in the brain, as shown in Fig. 8, a predetermined cover 62 having an opening to exposure an affected part A as a field of operation of a patient P is placed on the patient P on a surgical bed 61. In addition, a surgeon OP is positioned across the affected part A of the patient P from a surgical assistant AS so that the surgeon OP and the surgical assistant AS face to each other.

In addition, the main CRT display 30A for the surgeon OP and the sub CRT display 30B for the surgical assistant AS are arranged in the respective positions that allow them to easily view the screens of the respective displays 30A, 30B. Furthermore, the microscope body 10 is set out such that is objective lens 11 is positioned above the affected part A.

By the way, the microscope body 10 except the objective lens 11 and its surrounding portions is covered with a predetermined covering member (not shown) to prevent the microscope body 10 from undesired effects of the leakage of luminous flux and disturbing light from the outside.

Under such conditions, when the surgical microscope system 2 is actuated, images shown in Fig. 9(A) and Fig. 9(B) can be displayed on the respective CRT displays 30A, 30B. Especially, the image displayed on the CRT display 30B for the surgical assistant AS shown in Fig. 9(B) is one obtained by reversing the image displayed on the CRT display 30A for the surgeon OR in the X and Y directions by operating both the X direction converter 521 and the Y direction converter 522 of the image inverter 52 such that the affected part A can be provided as an image viewed from the surgical assistant AS. Then, each of the surgeon OR and the surgical assistant AS are allowed to view the images displayed on the CRT displays 30 as respective three-dimensional images to give the impression of solidity.

On the other hand, as shown in Fig. 10, at the time of surgical procedures on a spinal cord, the patient P on the surgical bed 61 is covered with a cover 62 with an opening for only exposing a spinal cord region as an affected part A.
In addition, a surgeon OP is positioned across the affected part A of the patient P from a surgical assistant AS so that the surgeon OP and the surgical assistant AS face to each other.

In addition, the main CRT display 30A for the surgeon OP and the sub CRT display 30B for the surgical assistant AS are arranged in the respective positions that allow them to directly view the screens of the respective displays 30A, 30B without any difficulty. Furthermore, the microscope body 10 is set out such that its objective lens 11 is positioned above the affected part A.

Under such conditions, when the surgical microscope system 2 is actuated, images shown in Fig. 11(A) and Fig. 11(B) can be displayed on the respective CRT displays 30A, 30B. Especially, as shown in Fig. 11 (B), the image displayed on the CRT display 30B for the surgical assistant AS is one obtained by reversing the image displayed on the CRT display 30A for the surgeon OR in the X direction by operating the X direction converter 521 of the image inverter 52 such that the affected part A can be provided as an image viewed from the surgical assistant AS. Then, each of the surgeon OR and the surgical assistant AS are allowed to view the images displayed on the CRT displays 30 with a three-dimensional image formation means 40 as respective three-dimensional images to give the impression of solidity.

According to the second preferred embodiment, in addition to the same effects as the effects (1), (3) to (7) of the first preferred embodiment, the following effects can be attained.

(8) In the surgical microscope system 2, the imaging part is displayed on each of the CRT displays 30A, 30B such that the image directly represents a view from the surgeon OP. On the other hand, the imaging part can be displayed on the CRT display 30B for the surgical assistant AS such that the image directly represents a view from the surgical assistant AS by inverting the image to be displayed on the CRT display 30B. Therefore, the image to be displayed on the CRT display 30B for the surgical assistant AS may be appropriately inverted when the surgeon OP and the surgical assistant AS facing to each other cooperatively perform the surgical procedures. Therefore, there is no possibility that the surgical assistant AS mistakes for vertical and horizontal directions of the image on the CRT display, compared with the conventional system in which the CRT display 30A for the surgeon OP is only provided. In other words, the assistant surgeon SA does not require reconfiguration of the operating direction or the like in the image so as to correspond to the standing position of the assistant surgeon SA, resulting in prompt operation.

(9) The surgical microscope system of the present embodiment is constructed such that only a predetermined surgical field such as an affected part A comes into view of each of the surgeon OP and the surgical assistant AS. Therefore, the surgeon OP and so on may only focus clearly on the affected part A by a masking portion 513. Therefore, even though long hour's surgical procedures, the possibility of causing eye fatigue can be further decreased and burdensome to the surgeon OP or the like can be reduced.

(10) The fader 512 regulates the light intensity to prevent the image on the CRT display 30 from being excessively brightened. Therefore, the displayed image is prevented from halation, so that the surgeon OP can be allowed to perform surgical procedures without difficulty.

### [Modified Embodiments]

Furthermore, it is noted that the present invention is not limited to each of the above-preferred embodiments. It will be appreciated by a person skilled in the art that other configurations of the surgical microscope system or the like that attain the objects of the present invention can be included in the present invention. For example, the following modifications may be included in the present invention.

In each of the above-preferred embodiments, for example, the eyepieces are not provided in the microscope body 10. According to the present invention, eyepieces may be preliminarily included in the microscope body 10 (i.e., it is not always used).

In addition, the spectrogram of the present invention is not limited to the configuration of the spectrogram 12 in each of the preferred embodiments. Any configuration may be allowed while satisfying the functions of the spectrogram.

Furthermore, in the first preferred embodiment, the direction of displaying the imaging part on the CRT display 30B supported by the turntable stand 31 can be changed by turning the CRT display 30B. Alternatively, for example, an image processing program or the like to be used in the image processing apparatus 20 may be designed to change the direction of the imaging part to be displayed by the CRT display 30B.

In the second preferred embodiment, the image processing apparatus 50 is provided independently from the processor 51 and the image inverter 52. Alternatively, however, a signal converter in the image inverter 52 may be integrally incorporated in the processor 51.

In the second preferred embodiment, furthermore, any mechanism is not particularly mounted. According to the present invention, however, a zoom portion for displaying an enlarged view of the affected part A may be additionally included in the processor 51 to facilitate the recognition of the affected part A. Therefore, there is an advantage of performing surgical procedures more easily.

## Claims

1. A surgical microscope system comprising:
an objective lens on which reflected light from an imaging part is incident;
a spectrogram distributes luminous flux from the objective lens into tow directions;
photoelectric imaging means provided on each distributed sides of the luminous flux;
an image processing apparatus for generating image signals in response to imaging signals from each photoelectric imaging means and alternately outputting the image signals;
an image displaying means for alternately displaying images in response to the respective image signals; and
a stereoscope generator for impressing the displayed image according to one of the image signals on one of eyes while impressing the displayed image according to the other of the image signals on the other of eyes.

2. A surgical microscope system as claimed in Claim 1, wherein
a plurality of the image displaying means is included, where the orientation of the image to be displayed by at least one of the image displaying means is variable.

3. A surgical microscope system as claimed in Claim 1, wherein
the image processing apparatus includes:
a reference image generation portion for generating a basis image signal in response to the imaging signal from each of the photoelectric imaging means and displaying the basis image on the image displaying means; and
an invert image generation portion for generating an inverted image signal provided as an inversion of the basis image in the vertical or horizontal direction in response to the imaging signal.

4. A surgical microscope system as claimed in any one of Claims 1 to 3, wherein
the image processing apparatus includes a masking portion for displaying a predetermined part being imaged among the images displayed on the image forming means.

5. A surgical microscope system as claimed in anyone of Claims 1 to 4, wherein
the image processing apparatus includes a fader for adjusting a light intensity of an image to be displayed by the image displaying means.
